# EUROPÄISCHE PATENTSCHRIFT

(11) **EP 2 997 652 B1**
(45) Veröffentlichungstag und Bekanntmachung des Hinweises auf die Patenterteilung: **28.06.2017**
(21) Anmeldenummer: 14724377.8
(22) Anmeldetag: 06.05.2014
(51) Int. Cl.: H02M 3/337

(54) **DÄMPFUNGSNETZWERK FÜR EINEN TRANSFORMATOR IN EINEM SCHALTWANDLER**
DAMPENING CIRCUIT FOR A TRANSFORMER IN A SWITCH MODE CONVERTER
CIRCUIT D'ATTÉNUATION POUR UN TRANSFORMATEUR DANS UN CONVERTISSEUR

(30) Priorität: 14.05.2013 EP 13167670
(43) Veröffentlichungstag der Anmeldung: 23.03.2016
(73) Patentinhaber: Siemens Aktiengesellschaft, 80333 München (DE)
(72) Erfinder: DYSZEWSKI, Janusz, A-1200 Wien (AT); EMBERGER, Andreas, A-1030 Wien (AT)
(74) Vertreter: Maier, Daniel Oliver
(86) Internationale Anmeldenummer: PCT/EP2014/059208
(87) Internationale Veröffentlichungsnummer: WO 2014/184053

(56) Entgegenhaltungen:
- EP-A2- 1 624 561
- AT-B- 356 219
- DE-A1- 2 926 515
- JP-A- S60 106 364
- US-A1- 2012 113 688

## Beschreibung

Die Erfindung betrifft einen Schaltwandler mit einem Transformator, eine Primärwicklung umfassend, welche in Serie mit zwei Schaltelementen an eine Eingangsspannung angeschaltet ist.

Schaltwandler dienen der Umwandlung einer Eingangsspannung in eine höhere oder niedrigere Ausgangsspannung. Als Eingangsspannung liegt beispielsweise eine gleichgerichtete Netzspannung vor. Die Spannungsübertragung mittels Transformator erfolgt dabei nicht mit einer Netzfrequenz sonder mit einer weitaus höheren Schaltfrequenz, mit der die Primärwicklung an die Eingangsspannung geschaltet wird. Dadurch verringert sich die Baugröße des Transformators. Nachteilig sind jedoch hochfrequenten Schwingungen, welche ohne entsprechende Entstörungen zu unerwünschten Nebeneffekten führen.

Oftmals wird die Primärwicklung mittels zweier Schaltelemente an die Eingangsspannung angeschaltet, um eine ausreichende Spannungsfestigkeit sicherzustellen. Die Anordnung ist dabei symmetrisch aufgebaut, sodass ein Schaltelement in einer Plusleitung des Transformators und ein Schaltelement in einer Minusleitung des Transformators angeordnet ist.

Eine solche Anordnung birgt zusätzliche Schwierigkeiten, weil die jeweiligen Primärwicklungshälften, die einem Schaltelement zugeordnet sind, nicht symmetrisch sind.
Beispielsweise ist die Kapazität zwischen einer Primärwicklungshälfte und einem dazugehörigen Schirm nur durch die angewendete Wickeltechnik bestimmbar, wobei es erfahrungsgemäß zu Abweichungen von bis zu 50% kommt. Zudem bewirkt die Transformatorgeometrie eine Unsymmetrie zwischen den Primärwicklungshälften, weil beispielsweise ein längerer Wicklungsumfang einer zweiten Primärwicklungshälfte zu einer höheren Schirmwicklungskapazität führt.
Um diese Schwierigkeiten in den Griff zu bekommen, werden nach dem Stand der Technik die Transformatorkapazitäten genau erfasst und die Ansteuerung der Schaltelemente wird entsprechend angepasst.

Die Dokumente AT 356 219, JP 60-106364, US 2012/0113688 zeigen Beispiele solcher Schaltwandler mit Transformatoren mit Mittelanzapfung.

Der Erfindung liegt die Aufgabe zugrunde, für einen Schaltwandler der eingangs genannten Art eine Verbesserung gegenüber dem Stand der Technik anzugeben.
Erfindungsgemäß wird diese Aufgabe gelöst durch die Merkmale des Anspruchs 1. Verbesserungen finden sich in abhängigen Ansprüchen.
Dabei ist die Primärwicklung in eine erste Teilwicklung und in eine zweite Teilwicklung mit einer dazwischen angeordneten Anzapfung aufgeteilt, wobei die Anzapfung über ein Dämpfungselement oder ein Dämpfungsnetzwerk mit einer Mittelanzapfung eines kapazitiven Spannungsteilers verbunden ist. Auf diese Weise werden hochfrequente Schwingungen gedämpft, welche ansonsten zu einem niedrigeren Wirkungsgrad führen würden. Während einer Entmagnetisierungsphase gleichen sich die an den geöffneten Schaltelementen anliegenden Spannungen einander an. Auch negative Effekte infolge eines ungleichzeitigen Schaltens beider Schaltelemente werden durch die erfindungsgemäße Schaltung weitgehend vermieden. Konkret bewirkt der kapazitive Spannungsteiler, dass an der Mittelanzapfung ein fixes Potenzial anliegt. Sobald während des Schaltbetriebs beide Schaltelemente öffnen und die Primärwicklung von der Eingangsspannung getrennt ist, bestimmt dieses fixe Mittelanzapfungspotenzial über das Dämpfungselement oder das Dämpfungsnetzwerk das Anzapfungspotenzial der Primärwicklung. Ein Symmetrierungsstrom wird dabei vom Dämpfungselement oder Dämpfungsnetzwerk begrenzt, wodurch wiederum parasitäre Schwingungen gedämpft werden.

Der erfindungsgemäße Schaltwandler ermöglicht eine vereinfachte Transformatorherstellung, weil gegenüber dem Stand der Technik größere Herstellungstoleranzen zulässig sind. Zudem wird die Gerätesicherheit erhöht, weil Überspannungen vermieden werden und Überspannungsbegrenzungsschaltungen mit Suppressordioden entfallen.

In einer vorteilhaften Ausprägung ist vorgesehen, dass der kapazitive Spannungsteiler einen ersten Kondensator und einen zweiten Kondensator umfasst, welche in Serie an die Eingangsspannung angeschlossen sind und dass die Mittelanzapfung zwischen den Kondensatoren über das Dämpfungselement oder das Dämpfungsnetzwerk mit der Anzapfung verbunden ist. Auf diese Weise ist ein einfach aufgebauter kapazitiver Spannungsteiler mit zwei gleich großen Kondensatoren realisiert.

Zudem ist bei einem einfachen Schaltwandleraufbau die Anzapfung einerseits über die erste Teilwicklung und das erstes Schaltelement an ein positives Potenzial der Eingangsspannung angeschaltet und andererseits über die zweite Teilwicklung und das zweite Schaltelement an ein Bezugspotenzial der Eingangsspannung angeschaltet.

Ein fixes Potenzial an der Mittelanzapfung des Spannungsteilers ist jedenfalls sichergestellt, wenn eine jeweilige Spannungsteilerkapazität um einen Faktor 5 bis 100, insbesondere um einen Faktor 10 höher ist als eine parasitäre Kapazität der aus Primärwicklung und Schaltelementen bestehenden Schaltung.

Günstigerweise ist vorgesehen, dass jedes Schaltelement als elektronischer Halbleiterschalter ausgebildet ist. Das ermöglicht eine einfache Ansteuerung mit hohem Wirkungsgrad.

Für eine einfache Ansteuerung ist jedem Schaltelement ein eigener Treiber zugeordnet. Der jeweilige Treiber setzt ein Steuersignal eines Reglers in eine entsprechende Steuerspannung des dazugehörenden Schaltelements um.

Des Weiteren ist es günstig, wenn der Schaltwandler als Eintaktflusswandler ausgebildet ist. In einer alternativen Umsetzung der Erfindung ist der Schaltwandler als Sperrwandler ausgebildet. Damit werden die Vorteile der Erfindung für verschiedene Wandlertypen nutzbar, je nach Anwendungsfall.

Zur Minimierung elektromagnetischer Störungen ist sinnvollerweise jeder Teilwicklung ein eigenen Schirm zugeordnet.

Die Vorteile der Erfindung werden insbesondere bei Transformatoren schlagend, welche eine zusätzliche Hilfswicklung zur Bereitstellung einer Hilfsversorgung aufweisen. Solche Hilfsversorgungswicklungen inklusive Streuinduktivitäten und parasitären Kapazitäten beeinflussen nämlich den Hauptschwingkreis und würden ohne die erfindungsgemäßen Maßnahmen zu einem schlechteren Wirkungsgrad und zusätzlichen Hochfrequenzstörungen führen.

Die Erfindung wird nachfolgend in beispielhafter Weise unter Bezugnahme auf die beigefügten Figuren erläutert. Es zeigen in schematischer Darstellung:

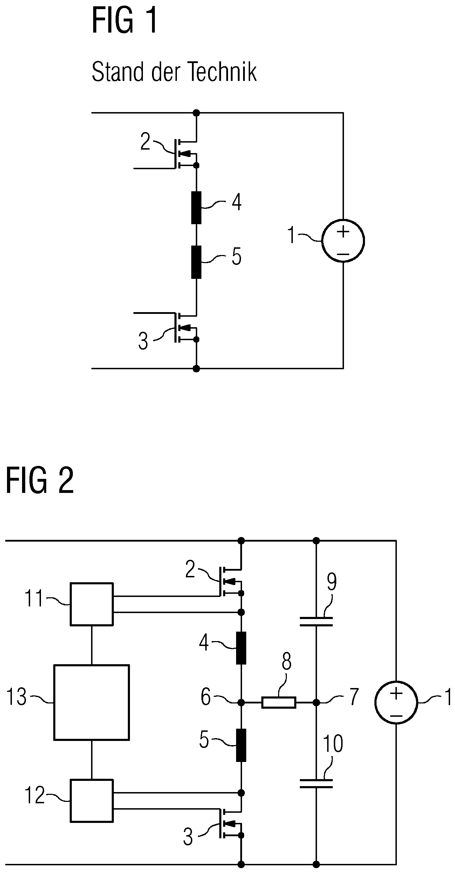

- Fig. 1: Schaltwandler mit zwei Schaltelementen nach dem Stand der Technik
- Fig. 2: Schaltwandler mit zwei Schaltelementen und kapazitiven Spannungsteiler

Ein herkömmlich aufgebauter Schaltwandler umfasst eine Primärwicklung, die in Serie mit zwei Schaltelementen 2, 3 an eine Eingangsspannung 1 anschaltbar ist. Dabei ist die Primärwicklung zwischen den Schaltelementen 2, 3 angeordnet, wobei jedem Schaltelement 2, 3 ein Teil 4, 5 der Primärwicklung zuordenbar ist. Dabei tritt der Nachteil auf, dass die Kapazitäten der beiden Primärwicklungsteile 4,5 nicht gleich groß sind. Nach dem Stand der Technik werden daraus resultierbare negative Effekte durch einen erhöhten Regelungs- und Steuerungsaufwand vermieden.

Dem gegenüber nutzt die vorliegende Erfindung einen kapazitiven Spannungsteiler, um eine Anzapfung 6 der Primärwicklung ein fixes Potential vorzugeben. Dabei teilt die Anzapfung 6 die Primärwicklung in zwei Teilwicklungen 4, 5. Neben der Primärwicklung umfasst der Transformator eine nicht dargestellte Sekundärwicklung. Die Anordnung der Wicklungen an einem Transformatorkern kann je nach Anwendungsfall verschieden sein. Beispielsweise werden die beiden Teilwicklungen 4, 5 der Primärwicklung übereinander gewickelt und darüber die Sekundärwicklung oder die Sekundärwicklung wird zwischen den beiden der Teilwicklungen 4, 5 der Primärwicklung gewickelt. Um elektromagnetische Störungen zu minimieren ist optional um jede Teilwicklung 4, 5 ein Schirm gewickelt, zum Beispiel in Form einer Kupferfolie.

Der Spannungsteiler besteht beispielsweise aus zwei Kondensatoren 9, 10, die in Serie an die Eingangsspannung 1 angeschlossen sind. Eine Mittelanzapfung 7 zwischen den beiden Kondensatoren 9, 10 ist dabei über ein Dämpfungselement 8 oder ein Dämpfungsnetzwerk mit der Anzapfung 6 der Primärwicklung verbunden. Auf diese Weise ist der Anzapfung 6 das Mittelanzapfungspotenzial des Spannungsteilers vorgegeben. Als Dämpfungselement 8 kommt im einfachsten Fall ein Dämpfungswiderstand zum Einsatz. In anderen Ausführungen dient ein LR- oder ein LRC-Glied als Dämpfungsnetzwerk.

Um das Potenzials auf einem fixen Wert zu halten sind die Kondensatoren 9, 10 gegenüber den parasitären Kapazitäten des Transformators ausreichend groß dimensioniert. Eine ausreichende Fixierung des Potenzials ist zumeist dann gegeben, wenn die Kapazität der Kondensatoren 9, 10 um etwa den Faktor 10 größer ist als die Summe der parasitären Kapazitäten des Transformators. Im Allgemeinen wird dieser Faktor zwischen 5 und 100 liegen.

Die synchrone Ansteuerung der beiden Schaltelemente 2, 3 erfolgt mittels einer geeigneten Steuerung 13. Die Schaltelemente 2, 3 sind günstigerweise als elektronische Halbleiterschalter (z.B. MOSFET) ausgebildet. Dabei ist jedem Schaltelement 2, 3 ein eigener Treiber 11, 12 zugeordnet, welcher ein Steuersignal in eine jeweilige Gatespannung umsetzt.

Sobald die beiden Schaltelemente abschalten und die Teilwicklungen 4, 5 von der Eingangsspannung 1 trennen, verlaufen bis zum nächsten Einschaltvorgang die an den Schaltelementen anliegenden Drain-Sourche-Spannungen synchron, weil der kapazitive Spannungsteiler der Anzapfung 6 ein fixes Potential vorgibt. Dabei findet ein ständiger Potenzialausgleich über das Dämpfungselement 8 oder das Dämpfungsnetzwerk statt, wobei aufgrund der dämpfenden Wirkung dieses Dämpfungselements 8 Schwingungen vermieden werden.

## Patentansprüche

1. Schaltwandler mit einem Transformator, eine Primärwicklung umfassend, welche in Serie mit zwei Schaltelementen (2, 3) an eine Eingangsspannung (1) angeschaltet ist, wobei die Primärwicklung in eine erste Teilwicklung (4) und in eine zweite Teilwicklung (5) mit einer dazwischen angeordneten Anzapfung (6) aufgeteilt und weiter ein kapazitiver Spannungsteiler mit einer Mittelanzapfung an die Eingangsspannung angeschaltet ist **gekennzeichnet dadurch, dass** dass die Anzapfung (6) über ein Dämpfungselement (8) oder ein Dämpfungsnetzwerk mit der Mittelanzapfung (7) des kapazitiven Spannungsteilers verbunden ist.

2. Schaltwandler nach Anspruch 1, **dadurch gekennzeichnet, dass** der kapazitive Spannungsteiler einen ersten Kondensator (9) und einen zweiten Kondensator (10) umfasst, welche in Serie an die Eingangsspannung (1) angeschlossen sind und dass die Mittelanzapfung (7) zwischen den Kondensatoren (9, 10) über das Dämpfungselement (8) oder das Dämpfungsnetzwerk mit der Anzapfung (6) verbunden ist.

3. Schaltwandler nach Anspruch 1 oder 2, **dadurch gekennzeichnet, dass** die Anzapfung (6) über die erste Teilwicklung (4) und das erstes Schaltelement (2) an ein positives Potenzial der Eingangsspannung (1) angeschaltet ist und dass die Anzapfung (6) über die zweite Teilwicklung (5) und das zweite Schaltelement (3) an ein Bezugspotenzial der Eingangsspannung (1) angeschaltet ist.

4. Schaltwandler nach einem der Ansprüche 1 bis 3, **dadurch gekennzeichnet, dass** eine jeweilige Spannungsteilerkapazität um einen Faktor 5 bis 100, insbesondere um einen Faktor 10 höher ist als eine parasitäre Kapazität der aus Primärwicklung und Schaltelementen (2, 3) bestehenden Schaltung.

5. Schaltwandler nach einem der Ansprüche 1 bis 4, **dadurch gekennzeichnet, dass** jedes Schaltelement (2, 3) als elektronischer Halbleiterschalter ausgebildet ist.

6. Schaltwandler nach einem der Ansprüche 1 bis 4, **dadurch gekennzeichnet, dass** das jedem Schaltelement (2, 3) ein eigener Treiber (11, 12) zugeordnet ist.

7. Schaltwandler nach einem der Ansprüche 1 bis 6, **dadurch gekennzeichnet, dass** der Schaltwandler als Eintaktflusswandler ausgebildet ist.

8. Schaltwandler nach einem der Ansprüche 1 bis 6, **dadurch gekennzeichnet, dass** der Schaltwandler als Sperrwandler ausgebildet ist.

9. Schaltwandler nach einem der Ansprüche 1 bis 8, **dadurch gekennzeichnet, dass** jeder Teilwicklung (4, 5) ein eigener Schirm zugeordnet ist.

10. Schaltwandler nach einem der Ansprüche 1 bis 9, **dadurch gekennzeichnet, dass** der Transformator eine zusätzliche Hilfswicklung zur Bereitstellung einer Hilfsversorgung aufweist.

## Claims

1. Switching converter comprising a transformer, which has a primary winding which is connected to an input voltage (1) in series with two switching elements (2, 3), wherein the primary winding is divided into a first partial winding (4) and into a second partial winding (5) with a tap arranged therebetween (6) and further a capacitive voltage divider with a centre tap is connected to the input voltage, **characterised in that** the tap (6) is connected by way of a damping element (8) or a damping network to the centre tap (7) of the capacitive voltage divider.

2. Switching converter according to claim 1, **characterised in that** the capacitive voltage divider comprises a first capacitor (9) and a second capacitor (10) which are connected to the input voltage (1) in series and that the centre tap (7) is connected to the tap (6) between the capacitors (9, 10) by way of the damping element (8) or the damping network.

3. Switching converter according to claim 1 or 2, **characterised in that** the tap (6) is connected to a positive potential of the input voltage (1) by way of the first partial winding (4) and the first switching element (2), and that the tap (6) is connected to a reference potential of the input voltage (1) by way of the second partial winding (5) and the second switching element (3).

4. Switching converter according to one of claims 1 to 3, **characterised in that** a respective voltage divider capacitance is higher by a factor of 5 to 100, in particular by a factor of 10, than a parasitic capacitance of the circuit comprising primary winding and switching elements (2, 3).

5. Switching converter according to one of claims 1 to 4, **characterised in that** each switching element (2, 3) is designed as an electronic semiconductor switch.

6. Switching converter according to one of claims 1 to 4, **characterised in that** each switching element (2, 3) is assigned a separate driver (11, 12).

7. Switching converter according to one of claims 1 to 6, **characterised in that** the switching converter is designed as a forward converter.

8. Switching converter according to one of claims 1 to 6, **characterised in that** the switching converter is designed as a flyback converter.

9. Switching converter according to one of claims 1 to 8, **characterised in that** each partial winding (4, 5) is assigned a separate shield.

10. Switching converter according to one of claims 1 to 9, **characterised in that** the transformer has an additional auxiliary winding for the provision of an auxiliary supply.

## Revendications

1. Convertisseur de commutation pourvu d'un transformateur, comprenant un enroulement primaire qui est connecté en série par deux éléments de commutation (2, 3) à une tension d'entrée (1), l'enroulement primaire étant divisé en un premier sous-enroulement (4) et un deuxième sous-enroulement (5) avec une prise (6) disposée entre eux, et en outre un diviseur de tension capacitif avec une prise médiane étant connecté à la tension d'entrée, **caractérisé en ce que** la prise (6) est reliée par l'intermédiaire d'un élément d'atténuation (8) ou d'un réseau d'atténuation à la prise médiane (7) du diviseur de tension capacitif.

2. Convertisseur de commutation selon la revendication 1, **caractérisé en ce que** le diviseur de tension capacitif comprend un premier condensateur (9) et un deuxième condensateur (10) qui sont connectés en série à la tension d'entrée (1), et **en ce que** la prise médiane (7) entre les condensateurs (9, 10) est reliée par l'intermédiaire de l'élément d'atténuation (8) ou du réseau d'atténuation à la prise (6).

3. Convertisseur de commutation selon la revendication 1 ou 2, **caractérisé en ce que** la prise (6) est connectée par l'intermédiaire du premier sous-enroulement (4) et du premier élément de commutation (2) à un potentiel positif de la tension d'entrée (1), et **en ce que** la prise (6) est connectée par l'intermédiaire du deuxième sous-enroulement (5) et du deuxième élément de commutation (3) à un potentiel de référence de la tension d'entrée (1).

4. Convertisseur de commutation selon l'une des revendications 1 à 3, **caractérisé en ce qu'**une capacité respective du diviseur de tension est augmentée d'un facteur 5 à 100, en particulier d'un facteur 10 par rapport à une capacité parasitaire du circuit composé de l'enroulement primaire et des éléments de commutation (2, 3).

5. Convertisseur de commutation selon l'une des revendications 1 à 4, **caractérisé en ce que** chaque élément de commutation (2, 3) est réalisé sous forme de commutateur électronique à semiconducteur.

6. Convertisseur de commutation selon l'une des revendications 1 à 4, **caractérisé en ce qu'**à chaque élément de commutation (2, 3) est associé un circuit excitateur propre (11, 12).

7. Convertisseur de commutation selon l'une des revendications 1 à 6, **caractérisé en ce que** le convertisseur de commutation est réalisé sous forme de convertisseur forward.

8. Convertisseur de commutation selon l'une des revendications 1 à 6, **caractérisé en ce que** le convertisseur de commutation est réalisé sous forme de convertisseur flyback.

9. Convertisseur de commutation selon l'une des revendications 1 à 8, **caractérisé en ce qu'**à chaque sous-enroulement (4, 5) est associé un écran propre.

10. Convertisseur de commutation selon l'une des revendications 1 à 9, **caractérisé en ce que** le transformateur comporte un enroulement auxiliaire supplémentaire pour fournir une alimentation de secours.
